# EUROPÄISCHE PATENTSCHRIFT

(11) **EP 1 517 869 B1**
(45) Veröffentlichungstag und Bekanntmachung des Hinweises auf die Patenterteilung: **25.10.2006**
(21) Anmeldenummer: 03762348.5
(22) Anmeldetag: 07.07.2003
(51) Int. Cl.: C04B 24/34, C04B 40/00

(54) **LUFTPORENBILDNER**
AIR-ENTRAINING ADMIXTURES
ENTRAINEURS D'AIR

(30) Priorität: 05.07.2002 AT 101202002
(43) Veröffentlichungstag der Anmeldung: 30.03.2005
(73) Patentinhaber: bcd Rohstoffe für Bauchemie HandelsgmbH, A-3400 Klosterneuburg (AT)
(72) Erfinder: MAYER, Gerald, A-1210 Wien (AT); AXMANN, Heinz, A-3400 Klosterneuburg (AT)
(74) Vertreter: Pfeifer, Otto
(86) Internationale Anmeldenummer: PCT/AT2003/000189
(87) Internationale Veröffentlichungsnummer: WO 2004/005214

(56) Entgegenhaltungen:
- WO-A-95/26936
- DATABASE CA [Online] CHEMICAL ABSTRACTS SERVICE, COLUMBUS, OHIO, US; FUJIOKA, SHIGENOBU ET AL: "Admixture for cement to improve freeze-thaw resistance" retrieved from STN Database accession no. 110:120198 XP002256100 & JP 63 123849 A (SANYO-KOKUSAKU PULP CO., LTD., JAPAN) 27. Mai 1988 (1988-05-27)

## Beschreibung

Die vorliegende Erfindung bezieht sich auf Luftporenbildner für Beton- und Mörtelmischungen.

Aus der Literatur ist bekannt, Luftporenbildner in wässriger Lösung oder in Pulverform in den verschiedensten Anwendungsbereichen zu verwenden. So werden sie in wäßrig-gelöster Form in Betonen verwendet, um eine Frost-Tausalzstabilität zu erreichen, oder sie kommen als Pulver u.a. in Mörteln als Verarbeitungshilfsmittel zum Einsatz.

Weiterhin ist bekannt, Harzseifen, das sind Abkömmlinge von Abietinsäure, Dextropimarsäure, Lävopimarsäure, sowie Derivate davon, z.B. Maleinsäureaddukte, als Luftporenbildner zu verwenden.

Diese werden aus Naturharzen wie z.B. Tallöl, Balsamharz oder Wurzelharz durch Verseifung mit Alkalihydroxiden wie z.B. LiOH, NaOH, KOH oder anderen Basen hergestellt. So werden Rezepturen in einschlägiger Literatur (Handbuch der Bauchemie, H. Reul , Seite 107, 108) beschrieben, die Triethanolamin neben Natronlauge oder Kalilauge verwenden.

Der Vorteil dieser Harzseifen als Luftporenmittel gegenüber synthetischen Luftporenbildnern ist ihre Eigenschaft, den Luftporengehalt auf einem einstellbaren Niveau zu stabilisieren.

Damit erhält man Luftporengehalte, die unabhängiger von äußeren Bedingungen wie etwa Rührintensität und Rührzeit sind. Die mittlere Größe der Luftporen, die man dabei erzielen kann, liegt bei ca. 100 µm. Aufgrund der Dissoziationskonstante der Carboxylgruppe sind diese Harzseifen aber erst ab pH-Werten über 10,5 wirksam. In der Praxis werden stabile Lösungen, das sind solche, die in verdünnten Lösungen keine Niederschläge bilden, von diesen Seifen erst ab einem pH-Wert von über 11,0 erhalten. Dies ist aus der Sicht der Gefährlichkeit der Handhabung ungünstig. Wenn diese Harzseifen in verdünnter Lösung und bei hohem pH-Wert zum Einsatz kommen, muß man außerdem mit unerwünschten Beschleunigungswirkungen auf den Zement rechnen.

Ein weiterer Nachteil dieser Harzseifenlösungen ist ihre Empfindlichkeit gegenüber der Wasserhärte, das heißt, ihre Neigung, mehr oder weniger unlösliche Salze, vor allem Ca²⁺⁻Salze zu bilden, die als Niederschlag aus der wässrigen Lösung noch vor der Anwendung ausfallen. Harzseifen auf Wurzelharzbasis verhalten sich in dieser Hinsicht wesentlich besser als Harzseifen auf anderer Rohstoffbasis. In den letzten Jahren sind aber diese Harze verknappt und schwer erhältlich.

Aufgabe dieser Erfindung ist es daher, Ersatzprodukte mit gleich guten oder sogar besseren Eigenschaften als jene, die die Produkte auf Wurzelharzbasis aufweisen, zu finden.

Die Verarbeitungseigenschaften für die verschiedensten Anwendungen sind durch einschlägige Normenwerke definiert.

Aus anwendungstechnischer Sicht sind für alle Anwendungen folgende Eigenschaften anzustreben:
- Kürzere notwendige Zeit bis zum Erreichen eines konstanten Niveaus der Luftporenmenge und Luftporenverteilung. Damit erreicht man in Mischwerken eine höhere Produktivität aufgrund von geringeren notwendigen Mischzeiten.
- Eine erhöhte Stabilität der Luftporen in der Zeit zwischen Mischwerk und der Baustelle.
- Geringere mittlere Porengröße, günstigerer Abstandsfaktor. Dies ermöglicht das Erreichen höherer Druckfestigkeiten bei gleichen Luftporengehalten.
- Unempfindlichkeit gegenüber Wasserhärte.
Erfindungsgemäß wird diesen Anforderungen dadurch entsprochen, dass man in das Abietinsäuregerüst zusätzlich zu den Carboxylgruppen SO₃H-Gruppen einführt.

Dies kann etwa durch bekannte Verfahren, wie direkte Sulfonierung mit SO₃ oder Sulfonierung von endständigen Doppelbindungen mit KHSO₃ und Peroxiden oder KNO₃ durchgeführt werden, wobei je nach Verfahren nur die endständigen Doppelbindungen der Dextropimarsäure oder die Doppelbindungen der Lävopimarsäure und/oder der Abietinsäure zur Reaktion gebracht werden.

Eine bevorzugte Ausführungsform der vorliegenden Erfindung, Sulfonsäuregruppen einzuführen, ist folgende:
Das Harz wird zunächst maleiniert. Es wird dann eine Lösung von einer oder von mehreren Aminosulfonsäuren in einer Lösung von einerseits Aminoalkoholen, wie z.B. Aminopropanol, Aminobutanol, oder andererseits ein- oder mehrwertigen Alkoholen, wie z.B. Propanol, Butanol oder Ethylenglycol, sowie auch Gemischen davon unter solchen Reaktionsbedingungen zugesetzt, dass sowohl die Aminogruppen des Aminoalkohols als auch die Aminogruppen der A-minosulfonsäure den Anhydridring des MSA-Adduktes öffnen und Amide bzw. Ester bilden. Diese solcherart hergestellten Derivate erweisen sich besonders wirksam:
   - Sie ergeben schon bei pH-Werten von 9,5 klare Lösungen der verseiften Produkte.
   - Sie ergeben eine günstigere Porenverteilung und eine erhöhte Porenstabilität.
   - Sie ergeben kleinere Luftporen, die dadurch besser wirksam sind.
   - Die daraus durch Sprühtrocknung hergestellten Pulver sind besser (rascher) löslich.
   - Sie sind unempfindlicher gegenüber der Wasserhärte in Bezug auf Niederschlagsbildung.

Folgende Beispiele sollen die Erfindung erläutern, ohne diese aber einzuschränken.

### Beispiel 1

Es werden 2000 g Balsamharz auf bekannter Weise mit 225 g MSA (Maleinsäureanhydrid) umgesetzt. Anschließend wird bei 130°C eine Lösung von 17,6 g Sulfanilsäure in 164,4 g 1-Amino-2-propanol zugesetzt und bei 130°C 30 min lang gehalten. Danach wird mit 50%iger KOH verseift und ein Feststoffgehalt von 50% eingestellt. Der pH-Wert wird auf 12-12,5 eingestellt.

### Beispiel 2: Einführung von Sulfonsäuregruppen über Diels-Alder Reaktion mit Lävopimarsäure und/oder Abietinsäure:

Es ist bekannt, daß sich als dienophile Komponenten für die Diels-Alder Reaktion Acryl-, Allyl-, Vinyl- oder Acetylenverbindungen eignen. Dies ist besonders dann der Fall, wenn die Doppel- oder Dreifachbindung des Dienophils durch auf Schwefel basierende funktionelle Gruppen wie Sulfoxide, Sulfinate, Sultone, Sulfonamide oder Sulfonate aktiviert werden (vgl. Synthesis and Diels-Alder Reaction of Acetylenic Sulfonate, von Lee, Albert W.M.; Chan, W.H.; Zhong, Z.P.; Lee, K.F.; Yeung, Anissa B.W., in J.Chem.Res.Synop. 1998, 6 326-327). Für die Erzielung der erfindungsgemäßen Eigenschaftsverbesserungen sind besonders Sulfonate geeignet, als Beispiel hiefür seien Vinylsulfonsäure und deren Salze sowie Sulfoethylmethacrylat und dessen Salze und Acetylensulfonsäureverbindungen und deren Salze genannt.

Die Herstellung einer solchermaßen synthetisierten Harzseife kann wie folgt vorgenommen werden:

1000 g Balsamharz werden in Stickstoffatmosphäre auf bekannte Weise mit 113 g Maleinsäureanhydrid umgesetzt. Nach vollständiger Umsetzung wird die Schmelze auf ca. 150°C abgekühlt und 20 g Propargyl-(3-sulfopropyl)-ether werden in der Form einer wäßrigen Lösung des Natriumsalzes langsam zugegeben, wobei das Wasser von der Reaktionsschmelze durch Destillation abgetrennt wird.

Danach wird mit 50 %-iger KOH verseift und ein Feststoffgehalt von 50% eingestellt. Der pH-Wert wird auf 12-12,5 eingestellt.

### Beispiel 3

Es werden 2000 g Balsamharz auf bekannter Weise mit 300 g MSA umgesetzt. Anschließend wird bei 130°C eine Lösung von 21,4 g Taurin und 42,6 g Sulfanilsäure in 256 g 1-Amino-2-propanol zugesetzt und bei 130°C 30min lang gehalten. Danach wird mit 50%iger KOH verseift und ein Feststoffgehalt von 50% eingestellt. Der pH-Wert wird auf 12-12,5 eingestellt.

### Vergleichsbeispiel A: Konventionelles verseiftes Harz ohne Sulfonsäuregruppen

Es werden 2000 g Balsamharz auf bekannter Weise mit 300 g MSA umgesetzt. Danach wird mit 50%iger KOH verseift und ein Feststoffgehalt von 50% eingestellt. Der pH-Wert wird auf 12-12,5 eingestellt.

### Beispiel 4: Sulfonierung endständiger Doppelbindungen

Etwa 15% des Balsamharzes bestehen aus Dextropimarsäure, die eine endständige Doppelbindung aufweist. Sie ist der Maleinierung nicht zugänglich und somit von geringer Wirksamkeit. Durch die Sulfonierung kann die Wirksamkeit erhöht werden.
2000 g Balsamharz werden in i-Butanol gelöst. Bei der Rückflußtemperatur von ca. 105°C mit α,α'-Azoisobutyronitril als Radikalbildner und einem Zulauf von 176 g einer 39%-igen wässrigen Natriumhydrogensulfitlösung erfolgt die Addition von SO₃Na. Die Reaktion wird während einer Zeit von 2 Stunden gehalten. Danach wird das i-Butanol/Wassergemisch abdestilliert. Die Weiterverarbeitung erfolgt analog zu Vergleichsbeispiel A.

### Vergleichsbeispiel B: Vinsol NVX

Das Pulver wird in Deionat gelöst und ein Feststoffgehalt von 50% eingestellt. Der pH-Wert wird auf 12-12,5 eingestellt.

### Beispiel 5

Mit den Lufporenbildnern der erfindungsgemäßen Beispiele 1 bis 4 und der Vergleichsbeispiele A und B werden Betone nach folgender Rezeptur hergestellt:
26,5% CEM I 32,5 R + 51,8% Zuschlag <6 mm + 21,6% Wasser + 0,133% einer Luftporenbildnerlösung von 4 Gew.-% in Wasser (für Beispiele 1, 3 und 4 sowie Vergleichsbeispiele A und B; 1 gew.-%ige Lufporenbildnerlösung in Beispiel 2). Das Ausbreitmaß der so hergestellten Betonmassen liegt zwischen 1,22 und 1,23 cm. Die Bestimmung des jeweiligen Luftporengehaltes erfolgt mit einem Air-Void-Analyser der Firma Dansk Beton Teknik a/s.

**Luftporenanalyse zu Beispiel 5**

| | | Beispiel 1 | Beispiel 2 | Beispiel 3 | Vergleichsbeispiel A | Beispiel 4 | Vergleichsbeispiel B |
|---|---|---|---|---|---|---|---|
| A | Luftporengehalt nach 5 min, Vol.-% | 5,2 | 4,9 | 4,4 | 4,5 | 4,2 | 4,7 |
| B | Luftporengehalt nach 60 min, Vol.-% | 4,6 | 5,3 | 4,2 | 4,0 | 3,5 | 3,9 |
| C | Abstandsfaktor nach 5 min | 0,16 | 0,19 | 0,21 | 0,22 | 0,19 | 0,21 |
| D | Abstandsfaktor nach 60 min | 0,18 | 0,21 | 0,21 | 0,26 | 0,24 | 0,25 |
| E | Luftporen <300 µm nach 5 min, Vol.-% | 2,5 | 1,9 | 1,6 | 1,6 | 1,8 | 1,7 |
| F | Luftporen <300 µm nach 60 min, Vol.-% | 2,1 | 2,2 | 1,6 | 1,2 | 1,2 | 1,2 |
| G | E/A % | 48 | 39 | 36 | 36 | 43 | 36 |
| H | F/B % | 46 | 42 | 38 | 30 | 34 | 31 |
| Bemerkungen | | günstigste Porenverteilung, besser als Beispiel 4 | beste Ergiebigkeit bei nahezu gleicher Wirksamkeit wie Beispiel 1 | bessere Porenstabilität als Beispiel 4 | Schlechtere Porenverteilung und Porenstabilität als Beispiel 4 | Anfangs günstige Porenverteilung, fällt dann aber auf das Niveau knapp über Vergleichsbeispiel B ab. | Referenz auf Basis Wurzelharz herkömmliches Produkt |

### Beispiel 6: Vergleich der Hartwassertoleranz

Es werden jeweils 4%-ige wässrige Lösungen der Luftporenbildner der Beispiele 1 bis 4 und der Vergleichsbeispiele A und B hergestellt. Zur Verdünnung von 50% auf 4% wird dabei einerseits hartes Wasser mit 20°dH verwendet, andererseits wird mittels Trilon BD ein deutscher Härtegrad von 15 eingestellt. Anschließend erfolgt die Zugabe von verdünnter Schwefelsäure, bis eine sofortige Fällung optisch feststellbar ist.

| | Beispiel 1 | Beispiel 2 | Beispiel 3 | Vergleichsbeispiel A | Beispiel 4 | Vergleichsbeispiel B |
|---|---|---|---|---|---|---|
| 1) 20° dH | 9,2 | 9,0 | 9,1 | 12,5 | 9,7 | 11,2 |
| pH-Wert, ab dem eine 4%-ige Lösung trüb wird | | | | | | |
| 2) 15° dH | 9,0 | 8,8 | 8,9 | 11,0 | 9,2 | 10,0 |
| pH-Wert, ab dem eine 4%-ige Lösung trüb wird | | | | | | |

### Gesamtbeurteilung:

Beispiel 1 weist sowohl einen höheren Anteil an Luftporen kleiner 300 µm als auch eine bessere Stabilität der Luftporen gegenüber dem Produkt aus Beispiel 4 auf und ist wesentlich besser als das Vergleichsbeispiel A. Das Beispiel 2 weist die beste Ergiebigkeit bei nahezu gleicher Wirksamkeit wie Beispiel 1 auf. Bezüglich der Hartwassertoleranz zeigen die Beispiele 1, 2, 3 und 4 eine deutliche Verbesserung gegenüber den Vergleichsbeispielen A und B.

## Patentansprüche

1. Luftporenbildner für Beton- und Mörtelmischungen auf der Basis von Harzseifen, **dadurch gekennzeichnet, daß** die Harzseifen zusätzlich zu den im Harzsäuremolekül vorliegenden Carboxylgruppen Sulfonsäuregruppen enthalten.

2. Luftporenbildner nach Anspruch 1, **dadurch gekennzeichnet, daß** die Harzseifen aus Balsamharz, Tallharz oder Wurzelharz oder deren Gemischen aufgebaut sind.

3. Luftporenbildner nach Anspruch 2, **dadurch gekennzeichnet, daß** das Balsamharz, Tallharz oder Wurzelharz und/oder deren Gemische mit ungesättigten Carbonylverbindungen verstärkt sind.

4. Luftporenbildner nach Anspruch 3, **dadurch gekennzeichnet, daß** das Balsamharz, Tallharz oder Wurzelharz und/oder deren Gemische mit Maleinsäureanhydrid verstärkt sind.

5. Verfahren zur Herstellung der Luftporenbildner nach einem der Ansprüche 1 bis 4, **dadurch gekennzeichnet, daß** die zusätzlichen SO₃H-Gruppen durch direkte Sulfonierung mit SO₃ eingeführt werden.

6. Verfahren zur Herstellung der Luftporenbildner nach einem der Ansprüche 1 bis 4, **dadurch gekennzeichnet, daß** die zusätzlichen SO₃H-Gruppen durch Sulfonierung von Doppelbindungen der Harzsäuren mit Bisulfit und Oxidationsmittel eingeführt werden.

7. Verfahren zur Herstellung der Luftporenbildner nach einem der Ansprüche 1 bis 4, **dadurch gekennzeichnet, daß** die zusätzlichen SO₃H-Gruppen durch Sulfonierung mit einer Aminosulfonsäure eingeführt werden.

8. Verwendung der Luftporenbildner nach einem der Ansprüche 1 bis 4 zur Ausbildung von Luftporen in Beton- und Mörtelmischungen.

## Claims

1. Air-entraining additive for concrete and mortar mixtures based on resin soaps, **characterised in that** the resin soaps contain sulphonic acid groups, in addition to the carboxyl groups present in the oleoresin acid molecule.

2. Air-entraining additive according to claim 1, **characterised in that** the resin soaps are formed from gum rosin, tall-oil rosin or wood rosin or mixtures thereof.

3. Air-entraining additive according to claim 2, **characterised in that** the gum rosin, tall-oil rosin or wood rosin and/or mixtures thereof are fortified with unsaturated carbonyl compounds.

4. Air-entraining additive according to claim 3, **characterised in that** the gum rosin, tall-oil rosin or wood rosin and/or mixtures thereof are fortified with maleic anhydride.

5. Process for the production of air-entraining additives according to one of claims 1 to 4, **characterised in that** the additional SO₃H groups are introduced by direct sulphonation with SO₃.

6. Process for the production of air-entraining additives according to one of claims 1 to 4, **characterised in that** the additional SO₃H groups are introduced by sulphonation of double bonds of the oleoresin acids with bisulphite and oxidation agents.

7. Process for the production of air-entraining additives according to one of claims 1 to 4, **characterised in that** the additional SO₃H groups are introduced by sulphonation with an aminosulphonic acid.

8. Use of the air-entraining additives according to one of claims I to 4 for the formation of air voids in concrete and mortar mixtures.

## Revendications

1. Entraîneur d'air pour mélanges de béton et de mortier à base de savons de résine, **caractérisé en ce que** les savons de résine contiennent des groupes acide sulfonique en plus des groupes carboxyliques présents dans la molécule d'acide résinique.

2. Entraîneur d'air selon la revendication 1, **caractérisé en ce que** les savons de résine sont constitués de résine balsamique, de résine d'huile de pin ou de résine de bois ou de leurs mélanges.

3. Entraîneur d'air selon la revendication 2, **caractérisé en ce que** la résine balsamique, la résine d'huile de pin ou la résine de bois et/ou leurs mélanges sont renforcés par des composés carbonyle insaturés.

4. Entraîneur d'air selon la revendication 3, **caractérisé en ce que** la résine balsamique, la résine d'huile de pin ou la résine de bois et/ou leurs mélanges sont renforcés par de l'anhydride maléique.

5. Procédé de production d'entraîneurs d'air selon l'une quelconque des revendications 1 à 4, **caractérisé en ce que** les groupes SO₃H supplémentaires sont introduits par sulfonation directe avec SO₃.

6. Procédé de production d'entraîneurs d'air selon l'une quelconque des revendications 1 à 4, **caractérisé en ce que** les groupes SO₃H supplémentaires sont introduits par sulfonation des double liaisons des acides résiniques avec du bisulfite et un agent oxydant.

7. Procédé de production d'entraîneurs d'air selon l'une quelconque des revendications 1 à 4, **caractérisé en ce que** les groupes SO₃H supplémentaires sont introduits par sulfonation avec un acide aminosulfonique.

8. Utilisation des agents entraîneurs d'air selon l'une quelconque des revendications 1 à 4 pour la formation de microbulles d'air dans des mélanges de béton et de mortier.
